# EUROPÄISCHE PATENTSCHRIFT

(11) **EP 0 962 746 B1**
(45) Veröffentlichungstag und Bekanntmachung des Hinweises auf die Patenterteilung: **24.03.2010**
(21) Anmeldenummer: 99109822.9
(22) Anmeldetag: 19.05.1999
(51) Int. Cl.: G01B 11/26

(54) **Verfahren und Vorrichtung, ob zwei hintereinander angeordnete Wellen fluchten**
Procedure and device to verify the alignment of two axles
Procédé et dispositif pour vérifier l'alignement de deux axes

(30) Priorität: 20.05.1998 DE 19822812
(43) Veröffentlichungstag der Anmeldung: 08.12.1999
(73) Patentinhaber: Prüftechnik Dieter Busch AG, 85737 Ismaning (DE)
(72) Erfinder: Lysen, Heinrich, D-85748 Garching (DE); Hermann, Michael, D-78050 Villingen-Schwenningen (DE); Hölzl, Roland, D-81369 München (DE)

(56) Entgegenhaltungen:
- WO-A-98/05924
- DE-A- 3 814 466
- DE-A- 3 911 307
- US-A- 4 889 425
- US-A- 5 513 000

## Beschreibung

Die Erfindung bezieht sich auf ein Verfahren nach dem Oberbegriff des Anspruchs 1 sowie Vorrichtungen zur Durchführung des erfindungsgemässen Verfahrens.

Verfahren, um zwei hintereinander angeordnete Wellen exakt aufeinander auszurichten, wurden in der Vergangenheit (siehe z.B. DE-3 911 307) zunächst mit rein mechanischen Messmitteln ausgeführt. Typische Beispiele für Tätigkeiten dieser Art waren das Ausrichten von Elektromotoren an direkt angekuppelte Pumpen oder vergleichbare Aggregate. - Nachdem es zu einem späteren Zeitpunkt gelungen war, die für solche Verfahren vorgesehenen mechanischen Messzeiger durch Lichtzeiger und zugehörige mechanische Sensoren durch elektronische zu ersetzen, konnte eine bedeutende Erleichterung und Verbesserung bei der Ausführung der zugehörigen Messaufgaben festgestellt werden. Die gleichzeitige Verwendung von Mikroprozessoren erwies sich in diesem Zusammenhang und insbesondere für jeweils nachfolgend zu erledigende Justierungs-Massnahmen an den entsprechenden Maschinen oder Einrichtungen ebenfalls als ausgesprochen hilfreich.

Für qualitativ hochwertige Ausführungsformen erwies es sich jedoch als erforderlich, die eingesetzten elektronischen Sensoren in Form spezieller, mit flächigen Widerstandselementen versehenen Fotoelemente entweder als selektierte Bauteile bereitzustellen oder für diese ein Linearisierungsverfahren vorzusehen. Nur auf diese Weise konnten Ungenauigkeiten und Nichtlinearitäten betreffend Ort eines einfallenden Lichtstrahls und einem abgreifbaren Ausgangssignal des Sensors hinreichend klein gehalten werden. Weiterhin waren die entsprechenden Nichtlinearitäten in gewissem Masse auch temperaturabhängig.

Es ist Aufgabe der Erfindung, diese Nachteile einer ansonsten äusserst nutzbringenden älteren Erfindung weitestgehend abzuschaffen, insbesondere Nichtlinearitäten und eine ggf. vorhandene Temperaturabhängigkeit der oder des vorzusehenden optischen Sensors/Sensoren zu reduzieren, und gleichzeitig die Präzision, d.h. die Wiederholbarkeit und die Auflösung eines solchen Sensors signifikant und in erheblichem Masse zu steigern.

Es ist eine weitere Aufgabe der Erfindung, die Anzahl der zu verwendenden optischen und/oder optoelektronischen Bauelemente signifikant zu verringern oder kostengünstiger auszulegen.
Diese Aufgabe wird durch ein Verfahren gemäß Anspruch 1 und Vorrichtungen gemäß den Ansprüchen 3, 7 und 10 gelöst. Es wird ein Verfahren angegeben, welches zum Feststellen dient, ob zwei hintereinander angeordnete Wellen hinsichtlich ihrer Mittelachsen fluchten oder gegeneinander im Winkel und/oder im Abstand versetzt sind, und wobei mittels mehrerer Messzeiger und zugehöriger Referenzelemente eine Mehrzahl geometrischer Messwerte über mehrere, von Welle zu Welle jeweils einander entsprechenden Mess-Winkelpositionen der Wellen zwei voneinander unabhängige Messwerte erzeugt werden und die Messwerte eine funktionale Abhängigkeit zumindest von Abstand und Winkelversatz (speziell Windschiefe) der Wellen aufweisen, wobei als Messzeiger mindestens ein Lichtstrahl in Form eines Lichtbündels geringer Divergenz, insbesondere in Form eines Laserstrahles verwendet wird, und das Verfahren in neuartiger Weise dadurch gekennzeichnet ist, dass der Lichtstrahl so orientiert wird, dass er auf zumindest ein Referenzelement in Form eines optoelektronischen Arrays mit einer Vielzahl von Bildelementen, insbesondere eines flächigen, als CCD (charge coupled device) wirkenden optoelektronischen Sensors einfällt und dabei einen Teil aller vorhandenen Bildelemente des Arrays beleuchtet und aktiviert,
dass sodann Positionen oder Koordinaten-Werte der beleuchteten und aktivierten Bildelemente des Arrays elektronisch einzeln ermittelt werden und dass aus den ermittelten Positionen oder Koordinaten-Werten unter Zuhilfenahme einer elektronischen Rechenvorrichtung (Computer) mindestens ein Kennwert ermittelt wird, welcher die Lage des auftreffenden Lichtfleckes auf dem optoelektronischen. Array bezüglich einer oder mehrerer Koordinaten beschreibt.

Zum Zwecke der Ermittlung des mindestens einen Kennwertes werden bevorzugt ein oder mehrere, insbesondere arithmetische, Mittelwerte errechnet, welche die mittlere Lage des Lichtflecks bezüglich einer bzw. mehrerer vorgegebener Koordinaten angeben.

In annähernd vergleichbarer Weise kann der mindestens eine Kennwert auch dadurch ermittelt werden, dass eine Schwerpunktsbestimmung des auf das optoelektronische Array einfallenden Lichtflecks erfolgt. Eine solche Schwerpunktsbestimmung bezieht sich dabei auf linienförmige oder flächige Anordnungen eines genannten optoelektronischen Arrays. Da der Lichtfleck masselos ist, versteht es sich, dass bei der Bildung des genannten Schwerpunktes Lichtintensitäten zugrunde gelegt werden. Die Lichtintensitäten können dabei einer kontinuierlichen Verteilung gehorchen. Sie können aber auch einem von zwei Intensitäts-Zuständen, nämlich "an / hell" oder alternativ "aus / dunkel" zugeordnet sein.

Weiterhin bedient sich das Verfahren mit Vorteil einer Rechenvorrichtung und eines zugehörigen Programmes, mittels welchem zusätzlich zur Errechnung eines oder mehrerer Mittelwerte die Bestimmung der jeweils zugehörigen Grössen "Streuung" oder "Varianz" durchgeführt wird. Durch diese Massnahme kann eine Überprüfung der Form des Lichtflecks erfolgen. Dies beruht darauf, dass ein unregelmässig geformter Lichtfleck andere Werte für die genannten Grössen erzeugen wird, als eine eher regelmässig geformt auf dem optoelektronischen Array einfallender Lichtstrahl. In vergleichbarer Weise können, soweit dies zweckdienlich ist, auch höhere statistische Momente zu einer Auswertung und Beurteilung der Qualität eines auftreffenden Lichtstrahles herangezogen werden.

Da ein einfallender Lichtstrahl typischerweise keine konstante Intensität über seinen Querschnitt aufweist, sondern zumeist in Nähe seiner Achse ein Intensitätsmaximum aufweist, ist es vorteilhaft, eine berandende Querschnittskontur für einen solchen Lichtstrahl dadurch zu definieren, dass bereits vor einer Signalerfassung eine Schwellenintensität festgesetzt wird, so dass als aktivierte Bildelemente eines optoelektronischen Arrays solche gelten, bei denen der einfallende Lichtstrahl eine lokale Intensität aufweist, welche grösser als die vorgenannte Schwellenintensität sein soll. Dies ist deswegen von speziellem Vorteil, weil die entsprechende Teil-Aufgabe durch Verwendung einer einfache Hardware in Form eines Comparators gelöst werden kann. Die gleiche Aufgabe kann zwar auch durch eine geeignete Rechner-Software-Kombination gelöst werden, jedoch ist die vorgenannte Lösung wesentlich leistungsfähiger und damit kostengünstiger. Die erforderliche Rechenleistung eines ohnehin vorzusehenden Rechners kann weiterhin dadurch niedrig gehalten werden, dass nur solche Bildelemente einer weiteren Verarbeitung zugeführt werden, die einer Kante bzw. Übergang zwischen einem Intensitätsbereich mit einem ersten Intensitätswert und einem anderen Intensitätsbereich mit einem zweiten Intensitätswert zugeordnet werden können.

Um die Intensität und/oder Querschnittsform des einfallenden Lichtstrahls zu überprüfen, ist es von Nutzen, dass die Anzahl der aktivierten Bildelemente auf Unter- oder Überschreitung von vorgegebenen Grenzwertzahlen untersucht wird. Auf diese Weise wird ersichtlich, ob ein einfallender Lichtstrahl entweder viel zu klein ist, oder zum Beispiel bereits auf den Randbereichen eines beleuchteten optoelektronischen Arrays liegt.

Sofern ausreichend Rechenzeit zur Verfügung steht, ist es von zusätzlichem Vorteil, einen zu registrierenden Lichtfleck (oder dessen Kanten, wie oben erwähnt) auf einem optoelektronischen Array einer weitergehenden Mustererkennung zuzuführen. Nur wenn seine jeweils registrierte Form einem vorgegebenen Kriterium entspricht, kommt es gegebenenfalls zu einer weiteren Auswertung, das heisst es erfolgt eine weitere Verwendung der ermittelten Kennwerte in einem nachfolgenden Rechnungsgang eines zum Verfahren zugeordneten Programm.

In einer weiteren Ausgestaltung des erfindungsgemässen Verfahrens wird so vorgegangen, dass in einer weiteren Auswertungs-Phase eine Erkennung und rechnerische Eliminierung von Lichtanteilen durchgeführt wird, welche auf unerwünschte optische Reflexionen zurückzuführen sind. Zu diesem Zwecke können in an sich bekannter Weise Methoden der Integraltransformationen, Deconvolutionsoperationen und ähnliche Rechenvorschriften, insbesondere basierend auf der sogenannten Schnellen Fourier-Transformation, herangezogen werden.

In einer weiteren Ausgestaltung wird gerade umgekehrt vorgegangen, nämlich dass optische Reflexionen gezielt herbeigeführt werden und zu einer messtechnischen Auswertung herangezogen werden. In diesem Zusammenhang ist es von Vorteil, dass der vorgesehene Sensor nunmehr in der Lage ist, einzelne beleuchtete Bereiche voneinander zu diskriminieren und zu parametrisieren, d.h. Parameter für eine Vielzahl von messtechnisch relevanten Einzelobjekten zu liefern. Es sei daran erinnert, dass bis dato alle diesbezüglich verwendeten Geräte praktisch nur zwei Parameter für einfallendes Licht ermitteln konnten, nämlich Schwerpunkt des einfallenden Lichtes in einer x-Achse und in einer dazu orthogonalen y-Achse.

Obwohl eine besonders schnelle Bereitstellung der genannten Kennwerte dadurch ermöglicht wird, dass die genannte Fallunterscheidung "An/hell" bzw. "Aus/dunkel" für die Lichtintensität am Orte eines einzelnen Bildelementes (pixel) eines optoelektronischen Arrays angewendet wird, ist es für noch genauere Analysen, sofern solche gewünscht werden oder erforderlich sind, auch möglich, dass für ein aktiviertes Bildelement die lokal vorhandene Beleuchtungsstärke des einfallenden Lichtstrahls ermittelt und für weitere Rechnungsgänge als digitalisierte Grösse bereitgestellt wird. Diese Technik, nämlich das Zusammenschalten z.B. eines CCD-Sensors mit einem Analog-Digital-Wandlers (ADC) ist an sich bekannt.

Unabhängig davon, ob die zuletzt genannte Verfahrensweise angewendet wird oder nicht, ist es in jedem Fall eine Verbesserung, dass nunmehr zu Kontrollzwecken in einfachster Weise auch die Lage und/oder der Querschnitt (oder die Intensitätseigenschaften über den Querschnitt) zumindest eines, vorteilhafterweise jedoch mehrerer, durch das optoelektronische Array registrierter Lichtstrahlen auf einem nachgeschalteten Bildschirm (Display) direkt und vollständig sichtbar gemacht werden kann. Durch diese sofortige visuelle Kontrollmöglichkeit kann sich ein Benutzer unmittelbar davon überzeugen, ob die Zahl und Anordnung auftreffender Lichtstrahlen von korrekter Grösse, Form, Lage erscheinen.

Es ist eine entsprechende Vorrichtung vorgesehen, welche als besonders kostengünstigen Grundbestandteil einen sog. CCD-Sensor aufweisen kann. In einer qualitativ verbesserten Ausführungsform ist vorgesehen, einen sog. CMOS - Bildsensor zu verwenden. - Zur weiteren Verbesserung der optoelektronischen Signalerfassung kann es sich als zweckmässig erweisen, dass eine Zusatz-Vorrichtung bereitgestellt wird, welche eine Modulations- oder Multiplexeinrichtung nach an sich bekanntem Stand der Technik umfasst, mit der der Lichtstrahl in seiner Intensität oder in seiner Strahlrichtung variiert werden kann, insbesondere pulsweise ein-und ausgeschaltet werden kann. Insbesondere sind zu diesem Zweck Modulationseinrichtungen auf LCD-Basis von Vorteil. Mit solchen kann auch bewirkt werden, dass der Lichtstrahl mit einem variierbaren Querschnitt versehen werden kann. Auf diese Weise ist es noch besser möglich, die Qualität des auf das optoelektronische Array auftreffenden Lichtstrahls zu beurteilen oder diesen einer besonders hochwertigen Mustererkennung zuzuführen, um eine besonders genaue Bestimmung der vorgenannten Kennwerte herbeizuführen.

Die Erfindung wird im folgenden anhand der Zeichnung erläutert. Im einzelnen wird dargestellt in
- Fig. 1:: die geometrische Lage und Verteilung von Lichtintensitäten mindestens eines Lichtflecks
- Fig. 2:: ein Strahlengang betreffend die Erzeugung und Detektion von zwei Lichtflecken
- Fig. 3:: ein weiterer Strahlengang betreffend die Erzeugung und Detektion von zwei Lichtflecken
- Fig. 4:: ein anderer Strahlengang zur Erzeugung von zwei Lichtflecken, mit jedoch nur einer reellen Lichtquelle
- Fig. 5:: die Positionierung eines Lichtflecks von länglicher oder asymmetrischer Gestalt

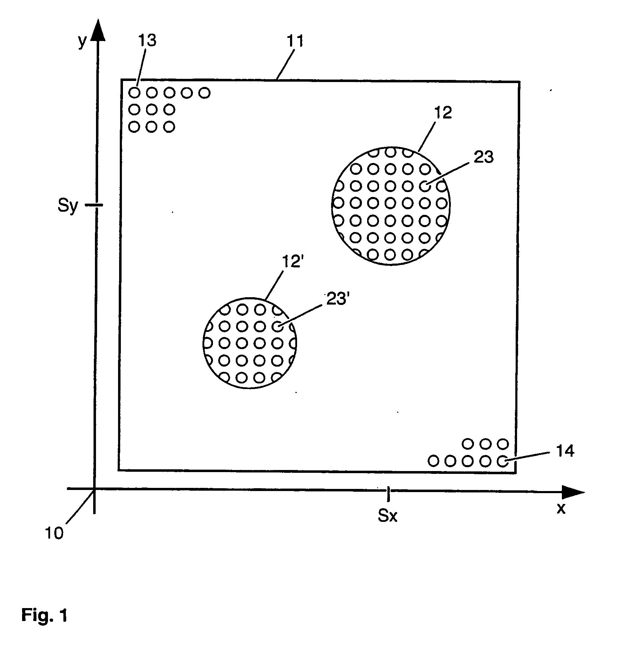

In Figur 1 wird gezeigt, wie ein durch einen Lichtstrahl auf einem optoelektronischen Array 11 ein oder mehrere Lichtflecken 12, 12' erzeugt wird bzw. werden, durch welche(n) einzelne optische Elemente 23, 23' des Arrays aktiviert werden. Bei einer nachfolgenden Auslesung des Arrays können also die Positionen der beleuchteten (und somit auch die der nichtbeleuchteten (Bezugsziffern 13, 14) ) optischen Elemente bestimmt werden. Diese Positionen können dabei relativ zu einem fest zum Array 11 vorgegebenen kartesischen Koordinatensystem bestimmt werden, dessen x-Achse und y-Achse sich im Ursprung 10 kreuzen. - Die Technik der Auslesung linearer oder flächiger optoelektronischer Arrays wird an dieser Stelle als zum Stand der Technik gehörend betrachtet. - Die Ermittlung der Kennwerte Sx und Sy, durch die die Lage des ersten Lichtflecks 12 sehr genau spezifiziert wird, geschieht dadurch, dass gemäss obiger Beschreibung durch Summation der x-Koordinaten der beleuchteten einzelnen optischen Elemente 23 entweder (optische) Schwerpunktskordinaten für den Schwerpunkt S oder andere Mittelwerte in x-Richtung ermittelt werden. Durch das Bezugszeichen Sx wird ein solcher Kennwert für die x-Koordinate symbolisiert.

In gleicher Weise, und unabhängig von der für die x-Koordinate durchgeführten Bestimmung des entsprechenden Kennwertes, wird ein solcher für die y-Koordinate errechnet. Durch das Bezugszeichen Sy wird ein solcher Kennwert für die y-Koordinate symbolisiert. - Die Ermittlung weiterer statistischer Grössen, die den beleuchteten Bildelementen zugeordnet werden können, entspricht bevorzugt herkömmlichen rechnerischen Verfahren und braucht an dieser Stelle nicht im Detail ausgeführt werden.

In vergleichbarer Weise werden die Schwerpunktskoordinaten für den Lichtfleck 12' ermittelt, welcher sich z.B. durch eine geringere Lichtintensität auszeichnen kann.

Es sei festgehalten, dass vor der Ermittlung der genannten Schwerpunktskoordinaten jeweils eine automatische Zuordnung von Berandungen eines oder mehrerer Lichtflecken erfolgt, so dass die Schwerpunktsermittlung eindeutig den einzelnen und zumeist unterschiedlich hellen oder geformten beleuchteten Bereichen des verwendeten Arrays oder Sensors zugeordnet werden kann. Die entsprechenden rechentechnischen Verfahren sind an sich bekannt.

Wiewohl auch die angegebenen Mittelwerts- oder Schwerpunktsberechnungen an sich bekannt sind, ergibt sich aus deren Anwendung der besondere Vorteil für das vorgeschlagene Verfahren, und zwar gemäss folgender Betrachtung:

Bei einem Lichtfleck von ca. 1 mm Durchmesser können ohne weiteres 10000 optische Elemente (pixels) beleuchtet werden und gehen dann in die Mittelwert- oder Schwerpunktsberechnung ein. Da die Abstände der optischen Elemente 23 nach heutiger Technologie nur noch wenige Mikrometer betragen, ergeben sich nach Abschluss einer durchgeführten Mittelwertbildung Kennwerte, welche rein arithmetisch eine Auflösung im Nanometer-Bereich haben. Diese Auflösung ist im Vergleich zu vorherigen Lösungen um mehrere Grössenordnungen feiner, also günstiger. Gleichzeitig ist aufgrund des Herstellungsverfahrens der optoelektronischen Arrays praktisch keine Linearisierung eines Ausgangssignals mehr erforderlich. Darüber hinaus sind die ermittelten Kennwerte Sx und Sy nur noch in relativ geringem Masse temperaturabhängig. Somit wird eine Erfassung von Messwerten ermöglicht, welche in Anwendung des z.B. in der DE3911307 angegebenen Verfahrens zu signifikant genaueren Endergebissen bzw. Arbeitsanweisungen führt.

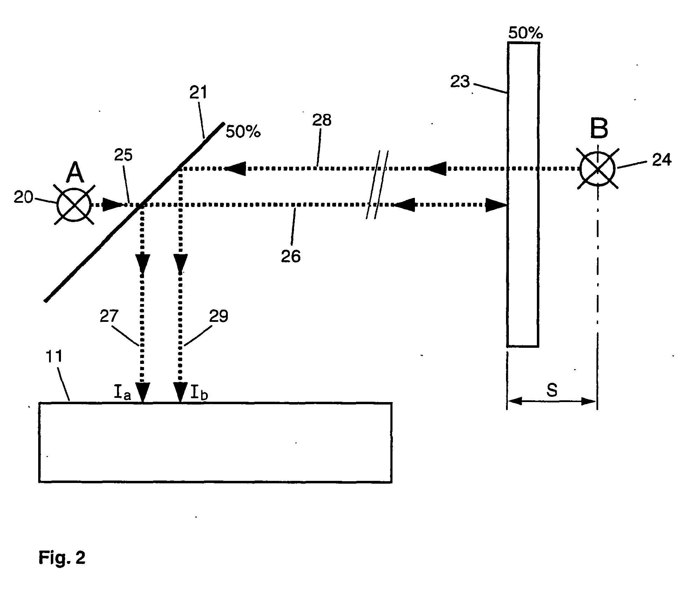

Darüber hinaus ermöglicht die Erfassung einzelner, unterschiedlicher beleuchteter Bereiche (Lichtflecken) auf einem solchen Sensor erst die erfindungsgemässen Sensor-Ausführungsformen gemäss Figuren 2 bis 5.

In Fig. 2 wird gezeigt, wie ein optoelektronisches Array 11 von zwei Lichtquellen gleichzeitig beleuchtet wird, so dass die beleuchteten Bereiche Ia und Ib separat voneinander einer messtechnischen Auswertung zugeführt werden können. Von besonderem Vorteil, wenn auch nicht zwingend, ist es hierbei, dass die lichtemittierenden Vorrichtungen A und B (kürzer auch als Lichtquellen bezeichnet, Bezugsziffern 20 bzw. 24) Licht unterschiedlicher Farbe d.h. Wellenlängen (oder -gemischen) emittieren. In diesem Falle ist der Sensor (Array 11) für mehrere Farben empfindlich, wie dies bereits in den sog. Digitalkameras ein handelsüblicher Standard ist. Das Array 11 ist relativ zur Lichtquelle 20 sowie zu einem teildurchlässigen Reflektor 21 fest beabstandet. In einer variablen Entfernung und mit variierender Orientation zur Lichtquelle A ist eine Kombination bestehend aus Lichtquelle B (Bezugsziffer 24) und teildurchlässigem Reflektor 23 angeordnet, wobei die grundlegende Anordnung von Lichtquelle und Sensoren für die hier vorgesehenen Ausricht-Instrumente an sich bekannt ist und zur Vermeidung von Längen nicht weiter erörtert werden soll. Mit Vorteil ist daher die Lichtquelle 24 zu einem teildurchlässigen Reflektor 23 fest beabstandet, und zwar mit einem möglichst grossen Abstand "s". Der Reflektor 23 kann nicht nur teildurchlässig sein, sondern insbesondere auch eine zusätzliche Farbfilterwirkung aufweisen, so dass er z.B. für grünes Licht stark reflektiert und für rotes Licht einen akzeptablen Transmissionsgrad aufweist. In diesem Falle ist vorgesehen, dass die Lichtquelle A (z.B. ein Halbleiterlaser oder eine fokussierte Leuchtdiode) z.B. mit der Farbe grün leuchtet, wohingegen die Lichtquelle B z.B. rot oder infrarot leuchtet. Ein von Lichtquelle 20 ausgehender Lichtstrahl 25 wird also zunächst durch den teildurchlässigen Reflektor 21 abgeschwächt und trifft auf die vordere, reflektierende Ebene des Reflektors 23. Er kehrt als reflektierter Lichtstrahl 26 abgeschwächt zurück, wird nochmalig, aber in entgegengesetzter Richtung, am Reflektor 21 reflektiert und abgeschwächt, und erzeugt als Lichtstrahl 27 den beleuchteten Bereich Ia auf dem Array 11. Dieser Bereich kann aufgrund seiner grünen Farbe eindeutig identifiziert werden, sofern er nicht ohnehin aufgrund seiner Lage als zu Lichtquelle 20 zugehörig erkannt werden kann. Je nach Position und Orientierung von Lichtquelle 24 und Reflektor 23 variiert der Ort des Auftreffens von Lichtstrahl 27 auf dem Array 27. Dadurch steht eine erste Messgrösse zur Verfügung, mit der sowohl die relative Orientierung der Kombination 23, 24 bezüglich 11, 20, 21 berechnet werden kann, als auch Angaben zur Justierung von zugehörigen Objekten oder Maschinen berechenbar sind, an welchen diese Kombinationen zum Zwecke einer möglichst geradlinigen Ausrichtung vorübergehend angebracht werden. - Gleichzeitig erzeugt Lichtquelle 24 mit z.B. rotem Licht einen gerichteten, und ebenfalls abgeschwächten Lichtstrahl 28, welcher nach Spiegelung an teildurchlässigem Reflektor 21 als Lichtstrahl 29 in abgeschwächter Form im beleuchteten Bereich Ib auf dem Array 11 auftrifft. Auch dieser Bereich kann aufgrund seiner anderen Farbe eindeutig identifiziert werden. Damit steht eine zweite Messgrösse zur Verfügung, um die vorgenannte Messaufgabe lösen zu können. Die weitere Verarbeitung der genannten ersten und zweiten Messgrösse geschieht dabei bevorzugt nach an sich bekannten Verfahren. Diese beruhen mehrheitlich darauf, dass eine Bestimmung von sinusförmig variierenden Messgrössen über einen mechanischen Drehwinkel durchgeführt wird, und zwar nach Amplitude und Phase, ggf. Drehrichtung. Die besonders genaue Ermittlung solcher Grössen bedient sich dabei verschiedener Verfahren der Ausgleichsrechnung.

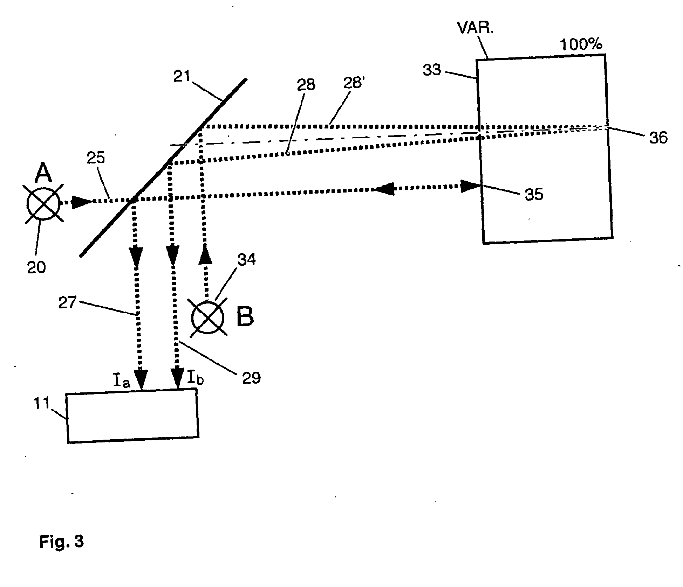

Ähnliche Voraussetzungen treffen auf die Anordnung nach Fig. 3 zu, so dass deren Beschreibung insbesondere unter Hinweis auf die o.g. Anmeldeschrift knapp gehalten werden kann.
Ähnlich wie in Fig. 2 sind zwei bevorzugt unterschiedliche Lichtquellen 20, 34 vorgesehen, wobei jetzt Lichtquellen 20, 34 und teildurchlässiger Reflektor 21 sowie das Bildelemente-Array 11 untereinander fest beabstandet sind. Beide Lichtquellen 30, 34 bewirken, ähnlich wie in Fig. 2 dargestellt, zwei unterschiedlich liegende und/oder unterschiedlich farbige beleuchtete Bereiche Ia und Ib. Diese Anordnung weist den Vorteil auf, dass alle aktiven Komponenten konzentriert angeordnet sind und eine orts- und orientierungsmässig variierbar angeordnete Messgerätkomponente nur noch aus einem speziellen Reflektor 33 bestehen kann. Dieser weist gemäss der Erfindung bevorzugt eine ca. 100% spiegelnde und relativ weit von der Frontseite 35 beabstandete (ca. 5 bis 50 mm) rückwärtige Oberfläche 36 auf Ausserdem ist eine teildurchlässige Verspiegelung an seiner Frontseite 35 vorgesehen, welche auch gleichzeitig eine Farbfilterwirkung aufweisen kann. - Bei Variation der Orientierung des Reflektors 33 bezüglich Reflektor 21 ergeben sich damit, unter Berücksichtigung der Strahlen 27, 28, 28' und 29, ebenfalls messtechnisch auswertbare unterschiedliche Positionen der beleuchteten Bereiche Ia und Ib. Diese Lösung, wie auch die der Fig. 2, erspart im Vergleich zu bekanntem Stand der Technik somit ein zweites sonst erforderliches, zweidimensional wirkendes optoelektronisches Empfangselement.

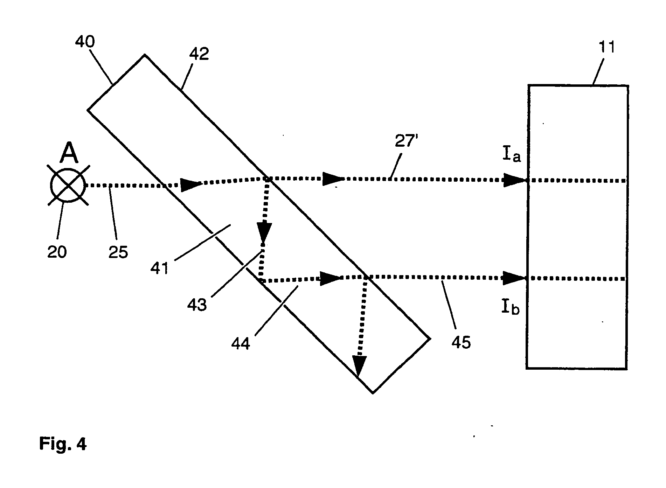

Eine weitere Lösung zeigt Fig. 4. Bei dieser ist nur eine einzige lichtemittierende Vorrichtung 20 zum Aussenden eines Lichtstrahles schmalen Durchmessers 25 vorgesehen. Lichtquelle 20 und die Kombination aus einem Empfangs-Array 11 und einer doppelseitig und jeweils teildurchlässig verspiegelten planparallelen transparenten Plane 40 sind variierbar beabstandet und zueinander orientierbar, gemäss der vorliegenden zu lösenden Messaufgabe. Empfangs-Array 11 und Platte 40 sind fest und hochpräzise zueinander beabstandet (und damit orientiert). Die Platte ist relativ dick und zur Erzielung einer hohen thermischen Stabilität aus dem Material "Zerodur" hergestellt. Der Abstand der vorderen Ebene 41 von der rückwärtigen Ebene 42 der Platte beträgt etwa 5 bis 50 mm. Es ergeben sich bereits bei leicht variierendern Einfallswinkel eines Lichtstrahls 25 auf die Platte 40 messbar unterschiedliche Distanzänderungen der beleuchteten Bereiche Ia und Ib auf dem Array 11, da dieses gemäss der vorgeschlagenen Vorgehensweise mittels Methoden der Statistik und der Merkmalsextraktion eine aussergewöhnlich hohe örtliche Auflösung bereitstellen kann.
Wie in Fig. 4 dargestellt, wird Lichtstrahl 25, welcher unter einem Relativwinkel von etwa z.B. 45° zur Flächennormalen auf eine vordere Ebene 41 auftrifft, dort teilweise reflektiert, teilweise in das optisch dichtere Medium der Plane gebrochen, um dann nach teilweisem Durchgang durch die rückwärtige Ebene 42 mit Parallelversatz als Strahl 27 auf Array 11 aufzutreffen.
Der restliche Anteil des an Ebene 42 durchgelassenem Lichtstrahls wird anteilig reflektiert und trifft als Strahl 43 die vordere Ebene 41, wie gezeigt. Es erfolgt eine erneute teilweise Reflexion, so dass ein bereits deutlich abgeschwächter Strahl 44 nach weiterer Abschwächung durch die rückwärtige Ebene 42 als Strahl 45 im Bereich Ib auf das Array 11 auftrifft, und zwar je nach Dicke der Platte 42 mit relativ grossem Abstand zum Bereich Ia. Dieser Abstand verändert sich geringfügig, aber sehr genau messbar, bei Variation des Einfallswinkels des Strahles 25. Die Positionen der Bereiche Ia und Ib verändern sich hingegen direkt mit Variation des Einfall-Ortes des Strahl 25 auf die Plane 40. - Anstelle einer Plane 40 können wirkungsmässig identische parallel beabstandete Spiegelflächen vorgesehen sein, deren temperatur- und lageunabhängige parallele Ausrichtung aber entweder weniger genau gelingt oder nur mit grösserem Aufwand bereitstellbar ist. - Weiterhin können Array 11 und Platte 40 zur Verbesserung der erforderlichen Stabilität unter spitzerem Winkel, oder parallel zueinander, angeordnet sein.

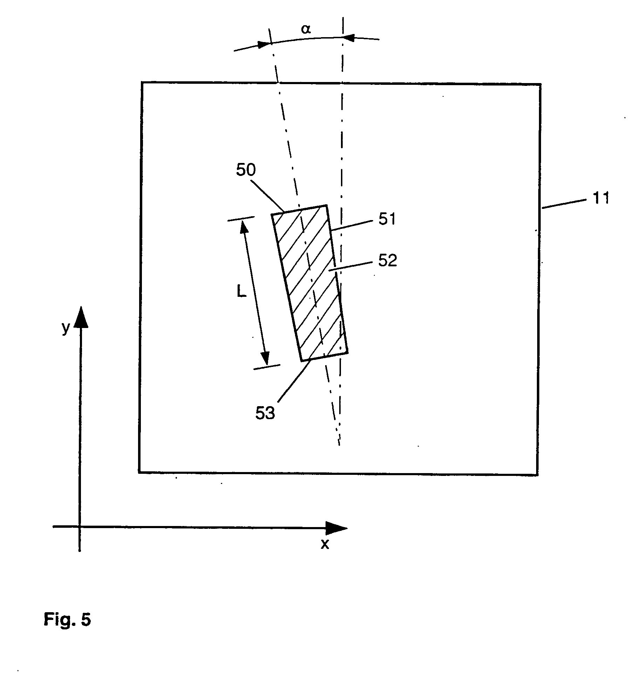

In einer weiteren Ausgestaltung der Erfindung wird in Fig. 5 gezeigt, wie unter Zuhilfenahme von pixelorientierten Lichtsensoren weitere messtechnische Möglichkeiten bereitgestellt werden können, welche vorher nicht genutzt wurden. Wird im Zusammenhang mit der zugrundeliegenden Messaufgabe ein vorgesehener Lichtstrahl nämlich so geformt, oder eine Lichtquelle so abgebildet, dass sich ein länglicher oder asymmetrischer Lichtfleck 50 auf dem Array 11 ergibt, so kann zusätzlich zur Lage des Schwerpunktes 52 relativ zu einem x-y-Koordinatensystem auch die winkelmässige Orientierung des Lichtfleckes 50 zu dem Array 11 ermittelt werden. Damit kann ein Drehwinkel alpha ("Rollwinkel") der emittierenden Lichtquelle relativ zur x-Achse des Arrays 11 angegeben werden, was z.B. zur Bestimmung von Kupplungsfehlern bei gekuppelten Wellen, Achsen und dgl. genutzt werden soll, Die mathematischen Verfahren, um eine Hauptrichtung des Lichtflecks 50 bezüglich dessen Schwerpunkt 52 und relativ zur x-Achse des Arrays 11 zu bestimmen, können dabei als bekannt angesehen werden.

Zusätzlich kann anhand der Seitenverhältnisse von z.B. der kurzen Seite 53 und der langen Seite 51 des Lichtflecks eine Aussage über die Abbildungsqualität gemacht werden, so dass bei ungenügenden Abbildungsverhältnissen die Messwertnahme automatisch verweigert oder zumindest bemängelt werden kann. Wird das Seitenverhältnis als akzeptabel erkannt, so kann aufgrund der Länge der Seite 51 unter Umständen eine Angabe gemacht werden, wie weit das Array von einer emittierenden Lichtquelle beabstandet ist. Dieses Verfahren ist genauer, als wenn nur der Durchmesser eines kreisrunden Lichtflecks ausgemessen wird. Darüber hinaus muss dafür Sorge getragen werden, dass zumindest Anteile des Lichtfleckes nach Art eines Projektionsvorganges entfernungsabhängig verändert werden. Es empfiehlt sich daher, für dieses zuletzt genannte spezielle zusätzliche Drehlage- und Entfernungsmessverfahren entweder eine projektive Abbildung von Leucht- oder Laserdioden vorzunehmen, oder einen vorhandenen Laserstrahl mit entsprechender Strahlformung zu modifizieren.

## Patentansprüche

1. Verfahren zum Feststellen, ob zwei hintereinander angebrachte Wellen hinsichtlich ihrer Mittelachsen fluchten oder gegeneinander im Winkel und/oder im Abstand versetzt sind, wobei mittels mehrerer Messzeiger und eines zugehörigen Referenzelementes (11) eine Mehrzahl geometrischer Messwerte über mehrere, von Welle zu Welle jeweils einander entsprechenden Mess-Winkelpositionen der Wellen mehrere voneinander unabhängige Messwerte (Iₐ, I_{b}) erzeugt werden und die Messwerte eine funktionale Abhängigkeit zumindest von Abstand und Winkelversatz der Wellen aufweisen, wobei als Messzeiger ein Lichtstrahl (25, 28) in Form eines Lichtbündels geringer Divergenz, inbesondere eines Laserstrahles verwendet wird,
**dadurch gekennzeichnet, dass**
nur ein Referenzelement (11) im Form eines optoelektromischen Arrays mit einer Vielzahl von Bildelementen für die Erfassung der Messwerte (Iₐ, I_{b}) mehrerer Messzeiger verwendet wird,
und wobei die Positionen oder Koordinaten-Werte der von den mehreren Messzeigern gleichzeitig beleuchteten und aktivierten Bildelemente des Arrays elektronisch ermittelt werden und wobei aus den ermittelten Positionen oder Koordinaten-Werten unter Zuhilfenahme einer elektronischen Rechenvorrichtung die Lagen der auftreffenden Lichtbündel auf dem Array ermittelt werden.

2. Verfahren nach Anspruch 1, wobei mindestens eine Lichtquelle (20) einen Lichtstrahl (25) in Form eines Lichtbündels geringer Divergenz erzeugt, der auf dem Referenzelement mindestens einen Lichtfleck (50) erzeugt,
**dadurch gekennzeichnet, dass**
der Lichtstrahl (25) so geformt wird, dass er auf dem Referenzelement einen länglichen oder asymmetrischen Lichtfleck (50) erzeugt und dass
aus der Orientierung des länglichen oder asymmetrischen Lichtflecks (50) der Rollwinkel der Lichtquelle (20) bezogen auf das Referenzelement ermittelt wird.

3. Vorrichtung zur Durchführung des Verfahrens nach Anspruch 1 oder 2, mit einer ersten und einer zweiten Lichtquelle (20, 24) zum Erzeugen der Lichtstrahlen (25,28),
nur einem als Referenzelement dienenden optoelektronischen Array (11),
einem ersten teildurchlässigen Reflektor (21),
und einem zu der zweiten Lichtquelle (24) fest beabstandeten zweiten teildurchlässigen Reflektor
(23),
wobei die erste Lichtquelle (20), der erste teildurchlässige Reflektor (21) und das Array (11) fest zueinander beabstandet sind.

4. Vorrichtung nach Anspruch 3, **dadurch gekennzeichnet, dass**
die zweite Lichtquelle (25) und der zweite teildurchlässige Reflektor (23) fest zueinander beabstandet sind

5. Vorrichtung nach Anspruch 3 oder 4, **dadurch gekennzeichnet, dass**
die erste Lichtquelle (20) und die zweite Lichtquelle (24) Licht verschiedener Wellenlängen aussenden.

6. Vorrichtung nach Anspruch 5, **dadurch gekennzeichnet, dass**
der zweite teildurchlässige Reflektor (23) als Farbfilter ausgeführt ist.

7. Vorrichtung zur Durchführung des Verfahrens nach Anspruch 1 oder 2, mit einer ersten und einer zweiten Lichtquelle (20, 34) zum Erzeugen der Lichtstrahlen (25, 28), nur einem als Referenzelement dienenden optoelektronischen Array (11),
einem teildurchlässigen Reflektor (21) und
einer Kombination aus zweiter Reflektoren (35, 36), wobei
die erste Lichtquelle (20), die zweite Lichtquelle (34), der teildurchlässige Reflektor (21) und das Array (11) fest zueinander beabstandet sind
und die beiden zweiten Reflektoren (35, 36) fest zueinander beabstandet sind.

8. Vorrichtung nach Anspruch 7, **dadurch gekennzeichnet, dass**
die erste Lichtquelle (20) und die zweite Lichtquelle (34) Licht verschiedener Wellenlängen aussenden.

9. Vorrichtung nach Anspruch 8, **dadurch gekennzeichnet, dass**
der erste der beiden Reflektoren (35) als Farbfilter ausgeführt ist.

10. Vorrichtung zur Durchführung des Verfahrens nach Anspruch 1 oder 2,
mit einer Lichtquelle (20) zum Erzeugen eines Lichtstrahls (25)
und einer Kombination aus teildurchlässig verspiegelter transparenter planparalleler Platte (40) zum Auftenten des Lichtstrahls (25) in mindestens einen ersten und einen zweiten sekundären Lichtstrahl (27',45) und nur einem als Referenzelement dienenden optoelektronischen Array (11),
wobei das Array (11) und die planparallele Platte (40) fest zueinander beabstandet sind.

11. Verfahren nach einem der Ansprüche 1 oder 2, **dadurch gekennzeichnet, dass**
mindestens einer der Lichtstrahlen (25, 28) in seiner Intensität verändert wird.

12. Verfahren nach Anspruch 11, **dadurch gekennzeichnet, dass**
mindestens einer der Lichtstrahlen (25, 28) pulsweise ein- und ausgeschaltet wird.

## Claims

1. Method for establishing whether two sequentially fitted shafts are aligned with respect to their central axes or are offset from one another in angle and/or by spacing, several measurement indicators and an associated reference element (11) being used to produce several mutually independent measured values (Iₐ, I_{b}) relating to several measured angular positions, respectively corresponding to one another from shaft to shaft, of the shafts and the measured values exhibiting a functional dependence at least on distance and angular offset of the shafts, a light beam (25, 28) in the form of a light bundle of small divergence, in particular a laser beam, being used as measurement indicator, **characterized in that** only one reference element (11) in the form of an optoelectronic array with a multiplicity of pixels is used to acquire the measured values (Iₐ, I_{b}) of several measurement indicators, and the positions or coordinate values of the pixels of the array which are illuminated and activated at the same time by the several measurement indicators being determined electronically, and the positions of the impinging light bundles on the array being determined from the determined positions or coordinate values with the aid of an electronic arithmetic unit.

2. Method according to Claim 1, at least one light source (20) generating a light beam (25) in the form of a light bundle of small divergence which generates at least one light patch (50) on the reference element, **characterized in that** the light beam (25) is formed such that it generates an elongated or asymmetrical light patch (50) on the reference element and **in that** the roll angle of the light source (20) referred to the reference element is determined from the orientation of the elongated or asymmetrical light patch (50).

3. Device for carrying out the method according to Claim 1 or 2, having a first and a second light source (20, 24) for generating the light beams (25, 28), only one optoelectronic array (11) serving as reference element, a first partially transmitting reflector (21), and a second partially transmitting reflector (23) positioned at a fixed distance from the second light source (24), the first light source (20), the first partially transmitting reflector (21) and the array (11) being positioned at a fixed distance from one another.

4. Device according to Claim 3, **characterized in that** the second light source (25) and the second partially transmitting reflector (23) are positioned at a fixed distance from one another.

5. Device according to Claim 3 or 4, **characterized in that** the first light source (20) and the second light source (24) emit light of different wavelengths.

6. Device according to Claim 5, **characterized in that** the second partially transmitting reflector (23) is designed as a colour filter.

7. Device for carrying out the method according to Claim 1 or 2, having a first and a second light source (20, 34) for generating the light beams (25, 28), only one optoelectronic array (11) serving as reference element, a partially transmitting reflector (21), and a combination of second reflectors (35, 36), the first light source (20), the second light source (34), the partially transmitting reflector (21) and the array (11) being positioned at a fixed distance from one another, and the two second reflectors (35, 36) positioned at a fixed distance from one another.

8. Device according to Claim 7, **characterized in that** the first light source (20) and the second light source (34) emit light of different wavelengths.

9. Device according to Claim 8, **characterized in that** the first of the two reflectors (35) is designed as a colour filter.

10. Device for carrying out the method according to Claim 1 or 2, having a light source (20) for generating a light beam (25), and a combination of a partially transmitting silvered transparent plane-parallel plate (40) for splitting the light beam (25) into at least a first and a second secondary light beam (27', 45), and only one optoelectronic array (11) serving as reference element, the array (11) and the plane-parallel plate (40) being positioned at a fixed distance from one another.

11. Method according to either of Claims 1 and 2, **characterized in that** at least one of the light beams (25, 28) can be varied in intensity.

12. Method according to Claim 11, **characterized in that** at least one of the light beams (25, 28) is switched on and off in a pulsed fashion.

## Revendications

1. Procédé pour déterminer si deux arbres montés l'un derrière l'autre sont alignés au niveau de leurs axes centraux ou s'ils présentent un décalage angulaire et/ou un écart l'un par rapport à l'autre, plusieurs valeurs mesurées (Iₐ, I_{b}) indépendantes les unes des autres sur plusieurs positions angulaires de mesure des arbres correspondant respectivement les unes aux autres d'un arbre à l'autre étant générées au moyen de plusieurs indicateurs de mesure et d'un élément de référence (11) correspondant et les valeurs mesurées présentant une dépendance fonctionnelle au moins à l'écart et au décalage angulaire des arbres, l'indicateur de mesure utilisé étant un rayon lumineux (25, 28) sous la forme d'un faisceau de lumière de faible divergence, notamment un rayon laser, **caractérisé en ce qu'**un seul élément de référence (11) sous la forme d'une matrice optoélectronique comprenant une pluralité de pixels est utilisé pour l'acquisition des valeurs mesurées (Iₐ, I_{b}) de plusieurs indicateurs de mesure, et les positions ou les valeurs des coordonnées des pixels de la matrice éclairés et activés simultanément par les plusieurs indicateurs de mesure sont déterminées électroniquement et les positions des faisceaux de lumière incidente sur la matrice sont déterminées à partir des positions déterminées ou des valeurs de coordonnées à l'aide d'un dispositif de calcul électronique.

2. Procédé selon la revendication 1, au moins une source de lumière (20) générant un rayon lumineux (25) sous la forme d'un faisceau de lumière de faible divergence qui produit au moins un spot lumineux (50) sur l'élément de référence, **caractérisé en ce que** le rayon lumineux (25) est façonné de telle sorte qu'il produit sur l'élément de référence un spot de lumière (50) allongé ou asymétrique et que l'angle de roulis de la source de lumière (20) par rapport à l'élément de référence est déterminé à partir de l'orientation du spot de lumière (50) allongé ou asymétrique.

3. Dispositif pour mettre en oeuvre le procédé selon la revendication 1 ou 2, comprenant une première et une deuxième sources de lumière (20, 24) pour générer les rayons lumineux (25, 28), une seule matrice optoélectronique (11) faisant office d'élément de référence, un premier réflecteur (21) partiellement transparent et un deuxième réflecteur (23) partiellement transparent à distance fixe de la deuxième source de lumière (24), la première source de lumière (20), le premier réflecteur (21) partiellement transparent et la matrice (11) se trouvant à un écart fixe les uns par rapport aux autres.

4. Dispositif selon la revendication 3, **caractérisé en ce que** la deuxième source de lumière (25) et le deuxième réflecteur (23) partiellement transparent se trouvent à un écart fixe l'un de l'autre.

5. Dispositif selon la revendication 3 ou 4, **caractérisé en ce que** la première source de lumière (20) et la deuxième source de lumière (24) émettent de la lumière à des longueurs d'onde différentes.

6. Dispositif selon la revendication 5,
**caractérisé en ce que** le deuxième réflecteur (23) partiellement transparent est réalisé sous la forme d'un filtre en couleur.

7. Dispositif pour mettre en oeuvre le procédé selon la revendication 1 ou 2, comprenant une première et une deuxième sources de lumière (20, 34) pour générer les rayons lumineux (25, 28), une seule matrice optoélectronique (11) faisant office d'élément de référence, un réflecteur (21) partiellement transparent et une combinaison de deuxièmes réflecteurs (35, 36), la première source de lumière (20), la deuxième source de lumière (34), le réflecteur (21) partiellement transparent et la matrice (11) se trouvant à un écart fixe les uns par rapport aux autres et les deux deuxièmes réflecteurs (35, 36) se trouvant à un écart fixe l'un de l'autres.

8. Dispositif selon la revendication 7, **caractérisé en ce que** la première source de lumière (20) et la deuxième source de lumière (34) émettent de la lumière à des longueurs d'onde différentes.

9. Dispositif selon la revendication 8, **caractérisé en ce que** le premier des deux réflecteurs (35) est réalisé sous la forme de filtre en couleur.

10. Dispositif pour mettre en oeuvre le procédé selon la revendication 1 ou 2, comprenant une source de lumière (20) pour générer un rayon lumineux (25) et une combinaison d'une plaque (40) à faces parallèles transparente réfléchissante partiellement translucide pour diviser le rayon lumineux (25) en au moins un premier et un deuxième rayons lumineux secondaires (27', 45) et une seule matrice optoélectronique (11) faisant office d'élément de référence, la matrice (11) et la plaque (40) à faces parallèles se trouvant à un écart fixe l'une par rapport à l'autre.

11. Procédé selon l'une des revendications 1 ou 2, **caractérisé en ce que** l'intensité d'au moins l'un des rayons lumineux (25, 28) est variée.

12. Procédé selon la revendication 11, **caractérisé en ce qu'**au moins l'un des rayons lumineux (25, 28) est activé et désactivé de manière impulsionnelle.
